Europäisches Patentamt

(19) European Patent Office

Office européen des brevets

(11) Numéro de publication : **0 193 760 B1**

(12) **FASCICULE DE BREVET EUROPÉEN**

(45) Date de publication du fascicule du brevet :
17.08.88

(51) Int. Cl.⁴ : **A 23 L  1/333**

(21) Numéro de dépôt : 86101825.7

(22) Date de dépôt : 13.02.86

(54) **Procédé de dissolution de membranes de calmar.**

(30) Priorité : 04.03.85 CH 962/85

(43) Date de publication de la demande :
10.09.86 Bulletin 86/37

(45) Mention de la délivrance du brevet :
17.08.88 Bulletin 88/33

(84) Etats contractants désignés :
AT BE CH DE FR GB IT LI LU NL SE

(56) Documents cités :
GB-A- 1 385 556
US-A- 2 688 552
US-A- 3 729 324
JOURNAL OF FOOD BIOCHEMISTRY, vol. 6, no. 2,
1982, pages 127-134, Food & Nutrition Press, Inc.,
Westport, Connecticut, US; Y.Z. LEE et al.: "Supplementation of squid fermentation with proteolytic enzymes"
PATENTS ABSTRACTS OF JAPAN, vol. 7, no. 61 (C-
156) [1206], 15 mars 1983; & JP - A - 57 208 942 (KIBUN
K.K.) 22.12.1982
FOOD SCIENCE & TECHNOLOGY ABSTRACTS, no.
83-07-R0465; A. EL-DASHLOUTY: "A salted and maturated product prepared from squid meat",

(73) Titulaire : **SOCIETE DES PRODUITS NESTLE S.A.**
**Case postale 353**
**CH-1800 Vevey (CH)**

(72) Inventeur :·**Leuba, Jean-Louis**

**CH-1049 Boussens (CH)**
Inventeur : **Meyer, Inge**
**Avenue des Alpes 29**
**CH-1814 La-Tour-de-Peilz (CH)**
Inventeur : **Andersen, Else Marie**
**Gunnarstorpsv 8C**
**S-26700 Bjuv (SE)**

## Description

La présente invention a pour objet un procédé de dissolution de membranes de calmar.

Dans le domaine de l'exploitation des produits de la mer, de nombreux procédés et machines ont été développés pour réaliser industriellement les opérations usuelles intervenant dans la préparation de poissons, mollusques ou crustacés. Nombre de ces procédés et appareils ont été développés spécialement pour la préparation d'espèces précises exigeant des opérations bien définies.

En ce qui concerne les calmars, on connaît en particulier des machines à nettoyer et à éviscérer ainsi que des procédés enzymatiques ou chimiques de séparation de certaines membranes indésirables. Le tégument de certains calmars tels que Illex illecebrosus et Todarodes sagittatus pêchés dans les eaux de Norvège ou Ommastrephes solani pêché dans les eaux du Japon présente en effet une couche inférieure ou membrane très résistante formée d'un tissu conjonctif très serré. Cette membrane reste généralement attachée à la chair lorsqu'on a pelé le calmar, elle se contracte à la cuisson, elle déforme les morceaux de calmar cuits auxquels elle est attachée et elle oppose une résistance désagréable à la mastication.

Un procédé récent a été développé pour séparer cette membrane de la chair. Il consiste à immerger le calmar nettoyé et éviscéré dans une saumure à 5 % de NaCl et soit à chauffer la saumure à 45 °C pour activer les enzymes endogènes du calmar soit à refroidir la saumure à 3 °C et à ajouter des protéases et des glucosidases du commerce pour attaquer les membranes de manière à pouvoir les détacher ensuite par un vigoureux rinçage à l'eau froide. Quoique efficace, ce procédé présente l'inconvénient d'un salage exagéré de la chair, de la nécessité d'un rinçage vigoureux et de la difficulté de trouver dans le commerce des enzymes convenables. En effet, des protéases du commerce telles que les trypsine, ficine ou papaine p. ex. ne peuvent pas dégrader le collagène natif des membranes mais peuvent par contre attaquer efficacement la chair, ce qui peut avoir des conséquences défavorables sur sa conservabilité, sa qualité, sa texture et son goût. En outre, les glycosidases et collagénases du commerce sont relativement rares et chères et d'une origine parfois incompatible avec des applications alimentaires.

La présente invention a pour but de proposer un procédé de dissolution de membranes de calmar qui soit simple, efficace et pallie les inconvénients cités ci-dessus.

A cet effet, le procédé selon la présente invention est caractérisé par le fait que l'on disperse du foie de calmar dans une saumure contenant 0,2-8 % en poids de NaCl, à raison d'une partie en poids de foie pour 1-35 parties en poids de saumure, on sépare une phase grasse et une phase aqueuse ou extrait de la dispersion, on dilue l'extrait avec de l'eau à raison d'une partie en poids d'extrait pour 1-15 parties en poids d'eau tout en ajustant la teneur en NaCl à 0,2-2 % en poids et le pH à 3,0-8,0, et l'on immerge le calmar nettoyé et éviscéré dans l'extrait dilué durant 30 min-10 h à 1-30 °C de sorte que les membranes du calmar se dissolvent spontanément dans une eau de cuisson ou de blanchiment.

On a constaté en effet qu'il est ainsi possible d'atteindre le but recherché en se passant complètement d'enzymes du commerce et en travaillant uniquement à partir de la matière première représentée par le calmar lui-même.

Dans le présent exposé, le terme « membrane » est donc utilisé pour désigner le tissu conjonctif particulièrement serré, résistant et coriace quoique mince qui forme la couche inférieure du tégument des calmars, à savoir la couche directement et solidement attachée à la chair.

De même, on utilise le terme « peau » pour désigner le tissu conjonctif relativement lâche et épais qui forme la couche extérieure du tégument des calmars et qui glisse relativement facilement sur la couche inférieure ou membrane du tégument.

Les adjectifs « interne » et « externe » sont utilisés pour qualifier un substantif en rapport avec le manteau creux du calmar, selon qu'il s'agit du dedans ou du dehors du manteau. C'est ainsi que l'on peut distinguer des membranes et des peaux internes et externes du manteau, la peau interne étant incolore et la peau externe étant pourvue de cellules pigmentées.

Sauf indication contraire, le terme « foie » est utilisé de manière globale pour désigner le foie accompagné ou non de tout ou partie du reste des viscères du calmar.

Sauf indication contraire, l'expression « le calmar nettoyé et éviscéré » est utilisée également de manière globale pour désigner les parties comestibles du calmar, à savoir le manteau et/ou les tentacules et/ou les ailes, sous forme entière ou divisée. Pour obtenir ces parties on aura, au cours d'opérations de nettoyage et éviscérage mécaniques et/ou manuelles, découpé les ailes, étêté le calmar, détaché les tentacules de la tête, sorti les viscères et extrait la plume du manteau. On aura éventuellement également enlevé la peau externe du manteau.

Enfin, par l'expression « les membranes se dissolvent spontanément » on entend que les membranes se désagrègent et se dissolvent en environ 1-5 min dans une eau à environ 50-60 °C.

Afin de déterminer si les membranes se dissolvent spontanément conformément au présent procédé ou non, on procède par la suite à un test de dissolution consistant à immerger le calmar dans l'eau froide et à chauffer. Le résultat du test est considéré comme positif lorsque les membranes commencent à se désagréger et à se dissoudre à environ 50-60 °C et qu'elles sont complètement dissoutes après que l'eau a frémi trois minutes.

Pour mettre en œuvre le procédé selon la présente invention, on peut utiliser toutes espèces de calmars qui se distinguent par des membranes particulièrement coriaces, notamment le petit Illex illecebrosus ou les relativement grands Todarodes sagittatus et Ommastrephes solani qui peuvent atteindre en 1 ou 2 ans une taille de environ 60 à 70 cm déjà.

On peut utiliser le calmar frais ou décongelé. Une fois le calmar nettoyé et éviscéré, le foie peut être détaché du reste des viscères comprenant entre autres le pancréas, l'estomac et le caecum. Le foie peut être également utilisé avec tout ou partie dudit reste des viscères.

On disperse le foie dans la saumure à raison d'une partie en poids de foie pour 1-35, de préférence 2-8 parties en poids de saumure. Pour ce faire, on peut exprimer le contenu du foie dans la saumure et brasser doucement ou placer le foie et tout ou partie du reste des viscères dans la saumure et brasser vigoureusement, voire homogénéiser brièvement. Ce faisant, il est préférable d'éviter de brasser trop vigoureusement ou d'homogénéiser trop longtemps afin de ne pas émulsionner la dispersion ce qui compliquerait la séparation ultérieure desdites phases grasse et aqueuse.

La saumure présente une teneur en sel de 0,2-8 %. Son pH n'a pas besoin d'être ajusté spécialement. Cependant, si l'on travaille avec une concentration de sel située à l'extrémité inférieure du domaine indiqué, on peut abaisser légèrement le pH, p. ex. jusqu'à environ 4,5 et augmenter la force ionique avec un tampon adéquat tel qu'un tampon Na-citrate-phosphate p. ex. En ce qui concerne la partie supérieure du domaine indiqué, la concentration limite de 8 % de NaCl ne devrait pas être dépassée afin de ne pas augmenter inutilement la teneur en sel de l'extrait dilué dans lequel le calmar sera immergé.

On sépare ensuite ladite phase grasse de ladite phase aqueuse ou extrait de la dispersion. Cette séparation peut s'effectuer par centrifugation ou par décantation p. ex. Dans une forme d'exécution préférée, on effectue cette séparation par décantation au cours d'une période de repos d'au moins 4 h à 1-10 °C, p. ex. toute la nuit à 4 °C. On a constaté en effet que la phase grasse peut se dégager lentement de la phase aqueuse et s'accumuler au-dessus si l'on a pris soin d'éviter d'émulsionner la dispersion par un brassage trop vigoureux ou une homogénéisation trop prolongée. La phase aqueuse, autrement dit l'extrait lui-même peut être conservé au moins 3 j à 4 °C. Il peut être également congelé ou lyophilisé sans perdre de son activité.

On dilue alors l'extrait avec de l'eau à raison d'une partie en poids d'extrait pour 1-15 parties en poids d'eau tout en ajustant la teneur en NaCl de l'extrait dilué à 0,2-2 % en poids, de préférence 0,2-0,49 % en poids et son pH à 3,0-8,0, de préférence 4,5-7,0. Dans une variante d'exécution, on ajuste le pH de l'extrait dilué à une valeur comprise dans un premier temps entre 3,0 et 6,0 et dans un second temps entre 6,0 et 8,0.

En ce qui concerne la teneur en NaCl de l'extrait dilué, on a constaté qu'elle est utile pour faciliter et accélérer le travail des enzymes du foie contenues dans l'extrait. On a vérifié cependant qu'il n'est pas nécessaire qu'elle soit plus élevée que 0,2-2 %, voire 0,2-0,49 % pour avoir pratiquement tout son effet. Et comme il n'est pas souhaitable que la teneur en NaCl de l'extrait dilué soit trop élevée parce que la chair du calmar s'imprègne ensuite d'une trop forte quantité de NaCl et prend un goût trop salé, on se tient donc avantageusement aux valeurs indiquées.

En ce qui concerne le pH de l'extrait dilué, on a constaté que les diverses enzymes du foie contenues dans l'extrait fournissent un travail global particulièrement satisfaisant si l'on opère soit en deux temps ou deux étapes, à savoir une première étape légèrement acide à pH 3,0-6,0 puis une seconde étape neutre à pH 6,0-8,0, ou inversement, soit en une seule étape neutre, voire légèrement acide à pH 4,5-7,0. Pour réaliser ces ajustements éventuels de pH, on peut utiliser des réactifs usuels tels que NaOH ou HCl p. ex. Pour l'acidification, on peut également utiliser un tampon adéquat tel qu'un tampon Na-citrate-phosphate p. ex.

On immerge le calmar nettoyé et éviscéré dans l'extrait dilué durant 30 min-10 h à 1-25 °C, de préférence durant 1-4 h à 4-12 °C et à raison d'une partie en poids de calmar pour 0,5-3 parties en poids de l'extrait dilué. On peut généralement recycler l'extrait dilué jusqu'à environ cinq fois.

On a constaté que les enzymes du foie contenues dans l'extrait dilué attaquent ainsi les membranes du calmar de manière telle qu'elles ne se détachent pas à proprement parler de la chair au cours du traitement lui-même ou d'un rinçage subséquent mais qu'elles se dissolvent spontanément au cours de la cuisson ou du blanchiment qu'il est nécessaire de réaliser de toute manière pour que le calmar soit consommable. On peut relever ici que le fait que la peau externe du manteau du calmar ait été enlevé ou non à l'occasion des opérations de nettoyage et éviscérage ne joue pratiquement pas de rôle, le tissu conjonctif de la peau étant suffisamment lâche, en particulier dans une zone moyenne avoisinant la membrane, pour que les enzymes diffusent facilement jusqu'à la membrane. Lorsque la peau externe du manteau n'a pas été enlevée au préalable, elle peut se désagréger et se dissoudre spontanément en même temps que les membranes dans l'eau de cuisson ou de blanchiment.

Après avoir sorti le calmar de l'extrait dilué et l'avoir de préférence rincé pour écarter l'extrait dilué resté à sa surface, on peut le commercialiser tel quel ou surgelé, directement ou après l'avoir blanchi deux ou trois min dans l'eau bouillante, le temps nécessaire pour que ses membranes se désagrègent et se dissolvent complètement dans cette eau.

Les exemples ci-après sont présentés à titre d'illustration du procédé selon la présente invention. Les pourcentages et parties y sont donnés en poids sauf indication contraire. Les tests de dissolution sont réalisés comme indiqué plus haut. Les calmars sont de l'espèce Todarodes Sagittatus, ils sont âgés d'un ou deux ans et mesurent entre 60 et 90 cm de long avec les tentacules.

Exemple 1

Un calmar congelé et conservé à -40 °C est mis à décongeler durant la nuit à 4 °C. Le lendemain, on le nettoye et l'éviscère, sans enlever la peau externe du manteau. On découpe dans le manteau des morceaux rectangulaires de 3-5 cm de côté et 1-2 cm d'épaisseur.

On prend toutes les viscères et on en écarte des tissus conjonctifs faciles à dégager. Par une brève homogénéisation à l'aide d'un mixer, on disperse les viscères dans un tampon Na-citrate-phosphate à 50 mmol/l contenant 0,29 % de NaCl et présentant un pH de 4,5, à raison de 126 g de viscères dans 400 ml de tampon. On sépare les phases grasse et aqueuse par centrifugation durant 60 min à 6 400 g. On recueille le surnageant, à savoir la phase aqueuse ou extrait et on le met au frais à 4 °C.

On dilue une partie de l'extrait dans un même tampon contenant 0,29 % de NaCl et présentant un pH de 4,5, à raison de 20 ml d'extrait pour 100 ml de tampon. Dans ces 120 ml d'extrait dilué, on immerge dans un premier temps durant 2 h à 25 °C cinq des morceaux de calmar ci-dessus pesant au total environ 80 g. Puis on rince les morceaux à l'eau.

On dilue une deuxième partie de l'extrait dans un tampon Na-phosphate à 50 mmol/l contenant 0,29 % de NaCl et présentant un pH de 7,0, à raison de 20 ml d'extrait pour 100 ml de tampon. Dans ces 120 ml d'extrait dilué, on immerge dans un second temps durant 2 h à 25 °C les cinq mêmes morceaux de calmar. Puis on rince les morceaux à l'eau.

On réalise le test de dissolution comme indiqué plus haut, à savoir en immergeant les cinq morceaux dans une eau froide en chauffant et en laissant frémir l'eau 3 min. Dès que l'eau atteint 50-60 °C, on observe que la peau externe pigmentée des cinq morceaux commence à se désintégrer et à colorer l'eau en se dissolvant. Simultanément, les membranes commencent également à se désintégrer et à se dissoudre. Après que l'eau a frémi 3 min, les cinq morceaux sont plats et leur surface présente la couleur blanche homogène de la chair, mais mate. Lorsqu'on les cuit ou les frit pour la consommation, ils présentent une bonne texture à la fois tendre et croquante. Cette texture n'est en particulier ni pâteuse, comme on pourrait le craindre si non seulement les membranes mais également la chair immédiatement au-dessous avait été trop attaquée au cours du traitement en deux temps, ni gommeuse comme ce serait le cas si les membranes avaient été insuffisamment attaquées au cours du traitement en deux temps.

Si, pour comparaison, on réalise le test de dissolution avec des morceaux du calmar ci-dessus non traités, on constate qu'ils se déforment, à savoir qu'ils se courbent fortement sur eux-mêmes par suite de la contraction des membranes qui présentent un aspect brillant et restent visiblement attachées à la chair. Si on les cuit ou les frit pour la consommation, ils présentent une résistance désagréable à la mastication, autrement dit une texture gommeuse due aux membranes restées attachées à leurs surfaces.

Exemple 2

On procède de manière semblable à celle décrite à l'exemple 1, à l'exception du fait que dans ledit second temps on immerge les cinq morceaux dans le même extrait dilué que dans ledit premier temps, après avoir ajusté son pH à 7,0 par addition de NaOH. Le test de dissolution donne le même résultat qu'à l'exemple 1.

Exemple 3

On procède de manière semblable à celle décrite à l'exemple 1, à l'exception du fait qu'au lieu de prendre toutes les viscères on ne prend que le foie, le pancréas, l'estomac et le caecum. Le test de dissolution donne le même résultat qu'à l'exemple 1.

Exemple 4

On procède de manière semblable à celle décrite à l'exemple 1, à l'exception du fait qu'au lieu de prendre toutes les viscères on ne prend que le foie seul à raison de 100 g de foie dispersé dans 400 ml de tampon. Le test de dissolution donne le même résultat qu'à l'exemple 1.

Exemples comparatifs

a) On procède de manière semblable à celle décrite à l'exemple 1, à l'exception du fait qu'au lieu de prendre toutes les viscères, on prend tout ce qu'il en reste après avoir écarté le foie. Les membranes sont très peu attaquées au cours du traitement en deux temps dans l'extrait dilué. Le test de dissolution donne un très mauvais résultat. Les morceaux ne se comportent guère mieux que des morceaux non traités.

b) On procède de manière semblable à celle décrite à l'exemple 1, à l'exception du fait qu'au lieu de prendre toutes les viscères, on prend seulement le pancréas, l'estomac et le caecum. Le test de dissolution donne le même résultat négatif qu'à l'exemple comparatif a) ci-dessus.

### Exemple 5

On prépare des morceaux de calmar rectangulaires de 3-5 cm de côté et 1-2 cm d'épaisseur de manière semblable à celle décrite à l'exemple 1.

On exprime le contenu du foie du calmar dans un tampon Na-citrate-phosphate à 50 mmol/l contenant 0,29 % de NaCl et présentant un pH de 4,5, à raison de 100 g de foie pour 400 ml de tampon. On brasse doucement et longuement pour obtenir une dispersion. On sépare les phases grasse et aqueuses par centrifugation durant 60 min à 6 400 g. On recueille le surnageant, à savoir la phase aqueuse ou extrait.

On dilue l'extrait dans un même tampon présentant un pH de 4,5 et contenant 0,29 % de NaCl, à raison de 20 ml d'extrait pour 100 ml de tampon. Dans ces 120 ml d'extrait dilué, on immerge durant 2 h à 25 °C cinq des morceaux de calmar ci-dessus pesant au total environ 80 g. Puis on rince les morceaux à l'eau.

On réalise le test de dissolution et l'on obtient un résultat positif pour les cinq morceaux.

### Exemple 6

On procède de la manière décrite à l'exemple 5 à l'exception du fait qu'au lieu de diluer l'extrait dans un tampon Na-citrate-phosphate on dilue l'extrait dans un tampon Na-phosphate à 50 mmol/l contenant 0,29 % de NaCl et présentant un pH de 7,0, à raison de 20 ml d'extrait pour 100 ml de tampon. Dans ces 120 ml d'extrait dilué, on immerge cinq morceaux de calmar pesant au total environ 80 g. Puis on rince les morceaux à l'eau.

On réalise le test de dissolution et l'on obtient un résultat positif pour les cinq morceaux.

### Exemple 7

On nettoye et éviscère des calmars frais. On détache les foies des viscères. On exprime le contenu des foies dans un tampon Na-citrate-phosphate à 50 mmol/l contenant 0,29 % de NaCl et présentant un pH de 4,5, à raison de 1 partie de foie pour 5 parties de tampon. On brasse doucement pour obtenir une dispersion. On laisse reposer la dispersion durant la nuit à 4 °C pour obtenir la séparation des phases grasse et aqueuse, la phase grasse se dégageant lentement et s'accumulant au-dessus de la phase aqueuse. On écarte la phase grasse et l'on recueille la phase aqueuse ou extrait clair et légèrement brun.

On dilue l'extrait dans une eau contenant 0,3 % de NaCl, à raison de 1 partie d'extrait pour cinq parties d'eau et l'on ajuste le pH de l'extrait dilué à 6,0. On immerge les manteaux des calmars dans l'extrait dilué, à raison de 1 partie de manteaux pour 1,7 parties d'extrait dilué, durant 2 h à 10 °C tout en les remuant doucement. Puis on rince les manteaux à l'eau.

On réalise le test de dissolution avec les manteaux entiers. Après le test qui donne un résultat très positif, la surface externe des manteaux est en particulier d'une blancheur homogène et mate.

### Exemple 8

On immerge successivement quatre nouvelles charges de manteaux de calmar dans l'extrait dilué de l'exemple 7. Le test de dissolution donne chaque fois un résultat pratiquement aussi bon qu'à l'exemple 1.

### Exemple 9

On procède de la manière décrite à l'exemple 7, à l'exception du fait qu'au lieu d'immerger les manteaux de calmars dans l'extrait dilué à 10 °C, on les immerge dans l'extrait dilué à 4 °C. On répète l'essai à 22 °C avec une autre charge de manteaux. Le test de dissolution donne pour les deux essais un résultat pratiquement aussi bon qu'à l'exemple 7.

### Exemple 10

On nettoye et éviscère des calmars frais. On détache les foies des viscères. On exprime le contenu des foies dans une saumure contenant 6 % de NaCl, à raison de 1 partie de foie pour 5 parties de saumure. On brasse doucement pour obtenir une dispersion. On laisse reposer la dispersion durant 4 h à 2 °C pour obtenir la séparation des phases grasse et aqueuse. On écarte la phase grasse et l'on recueille la phase aqueuse ou extrait.

On dilue l'extrait avec de l'eau, à raison de 1 partie d'extrait pour 5 parties d'eau, de sorte que la teneur en NaCl de l'extrait dilué soit de 1 %. Dans l'extrait dilué présentant un pH de 5,5-7,0, on immerge les manteaux des calmars à raison de 1 partie de manteaux pour 1,7 parties d'extrait dilué, durant 1-2 h à environ 5 °C. Puis on rince les manteaux à l'eau.

On réalise le test de dissolution avec les manteaux entiers. Le test donne des résultats aussi bons que ceux obtenus à l'exemple 7.

### Exemple 11

On nettoye et éviscère des calmars frais. On détache les foies des viscères. On exprime le contenu des foies dans une saumure contenant 1,5 % de NaCl, à raison de 1 partie de foie pour 5 parties de saumure. On brasse doucement pour obtenir une dispersion. On laisse reposer la dispersion durant 4 h à 2 °C pour obtenir la séparation des phases grasse et aqueuse. On écarte la phase grasse et l'on recueille la phase aqueuse ou extrait.

On dilue l'extrait avec de l'eau, à raison de 1 partie d'extrait pour 5 parties d'eau, de sorte que la teneur en NaCl de l'extrait dilué soit de 0,25 %. Dans l'extrait dilué présentant un pH de 5,5-7,0, on immerge les manteaux de calmars à raison de 1 partie de manteaux pour 1,7 parties d'extrait dilué, durant 1-2 h à environ 5 °C. Puis on rince les manteaux à l'eau.

On réalise le test de dissolution avec les manteaux entiers. Le test donne de bons résultats. La surface externe des manteaux présente en particulier une couleur blanche homogène et mate. On n'observe pratiquement aucune déformation du manteau et en particulier aucun raccourcissement typique d'un manteau aux membranes intactes qui se contractent lors du test.

### Exemple 12

On procède de manière semblable à celle décrite à l'exemple 1, à l'exception du fait que l'on inverse les pH respectifs des extraits dilués dans lesdits premier et second temps. Le test de dissolution donne le même résultat qu'à l'exemple 1.

### Revendications

1. Procédé de dissolution de membranes de calmar, caractérisé par le fait que l'on disperse du foie de calmar dans une saumure contenant 0,2-8 % en poids de NaCl, à raison d'une partie en poids de foie pour 1-35 parties en poids de saumure, on sépare une phase grasse et une phase aqueuse ou extrait de la dispersion, on dilue l'extrait avec de l'eau à raison d'une partie en poids d'extrait pour 1-15 parties en poids d'eau tout en ajustant la teneur en NaCl de l'extrait dilué à 0,2-2 % en poids et son pH à 3,0-8,0 et l'on immerge le calmar nettoyé et éviscéré dans l'extrait dilué durant 30 min-10 h à 1-30 °C de sorte que les membranes du calmar se dissolvent spontanément dans une eau de cuisson ou de blanchiment.

2. Procédé selon la revendication 1, caractérisé par le fait que l'on disperse le foie de calmar dans la saumure à raison d'une partie en poids de foie pour 2 à 8 parties de saumure.

3. Procédé selon la revendication 1, caractérisé par le fait que l'on sépare lesdites phases grasse et aqueuse par décantation au cours d'une période de repos de la dispersion d'au moins 4 h à 1-10 °C.

4. Procédé selon la revendication 1, caractérisé par le fait que l'on ajuste la teneur en NaCl de l'extrait dilué à 0,2-0,49 %.

5. Procédé selon la revendication 1, caractérisé par le fait que l'on ajuste le pH de l'extrait dilué à 4,5-7,0.

6. Procédé selon la revendication 1, caractérisé par le fait que l'on ajuste le pH de l'extrait dilué à une valeur comprise dans un premier temps entre 3,0 et 6,0 et dans un second temps entre 6,0 et 8,0 ou inversément.

7. Procédé selon la revendication 1, caractérisé par le fait que l'on immerge le calmar dans l'extrait dilué à raison d'une partie en poids de calmar pour 0,5-3 parties en poids de l'extrait dilué.

8. Procédé selon la revendication 1, caractérisé par le fait que l'on immerge le calmar dans l'extrait dilué durant 1-4 h à 4-12 °C.

### Claims

1. A process for dissolving squid membranes, characterized in that squid liver is dispersed in a brine containing 0.2-8 % by weight of NaCl in a quantity of 1 part by weight of liver to 1-35 parts by weight of brine, a fatty phase and an aqueous phase or extract of the dispersion are separated, the extract is diluted with water in a quantity of 1 part by weight of extract to 1-15 parts by weight of water while adjusting the NaCl content of the dilute extract to 0.2-2 % by weight and its pH to 3.0-8.0 and the cleaned and eviscerated squid is immersed in the dilute extract for 30 mins-10 hours at 1-30 °C so that the membranes of the squid dissolve spontaneously in cooking or scalding water.

2. A process as claimed in Claim 1, characterized in that the squid liver is dispersed in the brine in a quantity of 1 part by weight of liver to 2-8 parts of brine.

3. A process as claimed in Claim 1, characterized in that the aqueous and fatty phases are separated by decantation during standing of the dispersion for at least 4 h at 1-10 °C.

4. A process as claimed in Claim 1, characterized in that the NaCl content of the dilute extract is adjusted to 0.2-0.49 %.

5. A process as claimed in Claim 1, characterized in that the pH of the dilute extract is adjusted to 4.5-7.0.

6. A process as claimed in Claim 1, characterized in that the pH of the dilute extract is adjusted in a first step to a value of from 3.0 to 6.0 and, in a second step, to a value of from 6.0 to 8.0 or vice versa.

7. A process as claimed in Claim 1, characterized in that the squid is immersed in the dilute extract in a quantity of 1 part by weight of calamary to 0.5-3 parts by weight of dilute extract.

8. A process as claimed in Claim 1, characterized in that the squid is immersed in the dilute extract for 1-4 h at 4-12 °C.

### Patentansprüche

1. Verfahren zum Auflösen von Tintenfischmembranen, dadurch gekennzeichnet, daß man Tintenfischleber in einer 0,2 bis 8 Gew.-% NaCl enthaltenden Salzlösung in einem Verhältnis von einem Gewichtsteil Leber auf 1 bis 35 Gewichtsteile Salzlösung dispergiert, eine Fettphase und eine wäßrige Phase oder einen Extrakt der Dispersion abtrennt, den Extrakt mit Wasser im Verhältnis von einem Gewichtsteil Extrakt auf 1 bis 15 Gewichtsteile Wasser unter Einstellung des NaCl-Gehaltes des verdünnten Extraktes auf 0,2 bis 2 Gew.-% und dessen pH-Wertes auf 3,0 bis 8,0 verdünnt, und den gesäuberten und von Eingeweiden befreiten Tintenfisch während 30 Minuten bis 10 Stunden bei 1 bis 30 °C derart in den verdünnten Extrakt eintaucht, daß sich die Tintenfischmembranen spontan in einem Koch- oder Blanchierwasser auflösen.

2. Verfahren nach Anspruch 1, dadurch gekennzeichnet, daß man die Tintenfischleber in der Salzlösung im Verhältnis von einem Gewichtsteil Leber auf 2 bis 8 Gewichtsteile Salzlösung dispergiert.

3. Verfahren nach Anspruch 1, dadurch gekennzeichnet, daß man die genannte Fett- und Wasserphase durch Dekantieren im Zuge einer Ruheperiode der Dispersion von wenigstens 4 Stunden bei 1 bis 10 °C auftrennt.

4. Verfahren nach Anspruch 1, dadurch gekennzeichnet, daß man den NaCl-Gehalt des verdünnten Extraktes auf 0,2 bis 0,49 % einstellt.

5. Verfahren nach Anspruch 1, dadurch gekennzeichnet, daß man den pH-Wert des verdünnten Extraktes auf 4,5 bis 7,0 einstellt.

6. Verfahren nach Anspruch 1, dadurch gekennzeichnet, daß man den pH-Wert des verdünnten Extraktes auf einen pH-Wert einstellt, der während einer ersten Zeitspanne zwischen 3,0 und 6,0 und während einer zweiten Zeitspanne zwischen 6,0 und 8,0 liegt, oder umgekehrt.

7. Verfahren nach Anspruch 1, dadurch gekennzeichnet, daß man den Tintenfisch in den verdünnten Extrakt im Verhältnis von einem Gewichtsteil Tintenfisch auf 0,5 bis 3 Gewichtsteile verdünnten Extrakt eintaucht.

8. Verfahren nach Anspruch 1, dadurch gekennzeichnet, daß man den Tintenfisch während ein bis vier Stunden bei 4 bis 12 °C in den verdünnten Extrakt eintaucht.